Europäisches Patentamt

European Patent Office

Office européen des brevets

(11) Publication number: 0 325 308 A1

## EUROPEAN PATENT APPLICATION

(21) Application number: 89200007.6

(22) Date of filing: 02.01.89

(51) Int. Cl.4: G03B 27/58

(30) Priority: 20.01.88 NL 8800130

(43) Date of publication of application:
26.07.89 Bulletin 89/30

(84) Designated Contracting States:
BE CH DE ES FR GB IT LI NL SE

(71) Applicant: CHEMCO SOEST B.V.
De Beaufortlaan 28
NL-3768 MJ Soest(NL)

(72) Inventor: Steenbergen, Marcel Fredericus
Andreas
Irenelaan 54
NL-3761 BN Soest(NL)

(74) Representative: Baarslag, Aldert D. et al
Nederlandsch Octrooibureau
Scheveningseweg 82 P.O. Box 29720
NL-2502 LS 's-Gravenhage(NL)

(54) Light-proof cassette.

(57) Placing a roll (4) of photosensitive material (43) in a cassette and feeding out the end (45) of the strip (15) through the lightlock (16) at the same time proves to give many a problem, the more during series handling, like damaging the strip and irreversibly telescoping out of the roll.

With the new cassette the roll can be handled in horizontal position. The cassette has a hinge (21) opposite the light-lock split (16), is extrudable in opened form by means of a simpler die, both walls (17, 18) of the light-lock can be lined with soft material (19, 20) in the opened position, the roll (4) can be placed in it in horizontal position and the end (45) of the strip over one of the walls (17) of the light-lock. Still maintained in the same position the cassette is shut home and both covers (3) can be fitted. The covers each have a mandrel (5) to carry the roll in the closed cassette free of contact with the walls, each mandrel having an excentric extension (37) with a sloping top face (36). The top face lifting the hollow core (41) and the roll (4) when the covers (3) are being fitted by means of a special guiding tool.

fig-3

## Light-proof cassette

The invention relates to a light-proof cassette and to a method for manufacturing the housing and for using the cassette which is intended for receiving and delivering a strip, such as a strip of photosensitive material, which is rolled up onto a core to form a roll and one end of which is fed out through a delivery slit having a light lock, which cassette comprises:

an essentially square housing which has optionally rounded corners approximately the length of the roll to be packaged, in which the delivery slit is arranged in the region of one of the corners over the entire length and which has an internal cavity such that the roll can be received and unwound without contact with the walls, and two detachable end covers which can be placed and mounted in a light-proof manner on each end of the housing, a mandrel, projecting into the housing from each cover at the centre of the square housing cross-section, which mandrels rotatably support the ends of the core of the roll with little play and bear it under all conditions.

the light lock being lined with a soft fibrous material on both walls on either side of the delivery slit as a seal and to protect the material to be delivered, and the housing and the covers being manufactured from a photographically/chemically inert, rigid, impact-resistant plastic.

A cassette of this type is known from EU-B-0,016,488. The cassette described in said publication fulfils a useful function on the photographic setting industry market. Together with other similar cassettes, they are starting to form an unofficial standard cassette for use in a number of photographic setting machines. These are cassettes which, with a cross-section of approximately 10x10 cm and a length of approximately 7.5-40 cm, are already used in numbers of many hundreds of thousands to a few millions per year in Europe alone. It is obvious that cassettes with smaller and larger dimensions can also be used and that the invention equally relates thereto. Said cassettes are of the throw-away type as soon as they are empty, but should nevertheless be of a reasonable quality so that, during storage and transport and during delivery to the setting machine, the photosensitive material is effectively protected against the incidence of light and moisture effects. These requirements are satisfied by most existing cassettes, although it is apparent from a number of different patent applications that improvements in, for example, the light lock are possible.

A drawback of the known cassette according to EU-B-0,016,488 and similar cassettes is, however, the fact that the filling of the cassettes with the roll of photosensitive material at the manufacturers is a relatively laborious process and gives rise to complete loss of the roll fairly often because the roll telescopes out when the cassette is being loaded or the feeding of the flap through the light lock and the delivery slit presents difficulties. The manufacture of the known cassettes also presents certain difficulties such as the internal lining of the delivery slit and the light lock with a soft fibrous material. In the majority of cases, the expensive velvet is still used for this purpose because it protects the photosensitive material well in practice, does not cause any scratches and is satisfactorily light proof even in a simple light lock of the simplest form such as is depicted in the known publication.

The object of the invention is therefore to provide a cassette which is exchangeable in terms of dimension and use and which can be loaded more easily at the manufacturers and provides cost saving by using an appreciably cheaper light-lock lining material.

The cassette according to the invention is characterized in that the corner strip of the housing situated diagonally opposite the light lock is constructed as a hinge. Due to the use of the hinge, the housing can be folded open in order to considerably facilitate access when inserting the roll of photosensitive material, it no longer being necessary for the flap to be pushed with difficulty through the light lock and the delivery slit but it can simply be laid on the opened light lock and delivery slit, after which the housing can be closed which also closes the light lock with the end flap of the photosensitive material received therein. It will be clear that virtually any known hinge can be used for the hinge, inter alia, a so-called "piano hinge", provided it is made light-proof, for example, by lining it with a flexible, nontransparent foil. Diverse forms of insertion hinges can also be used.

According to a preferred embodiment, however, the corner strip comprises a plastic hinge and the latter is manufactured from elastic material coextruded with the rest of the housing. Preferably, the housing is in this case manufactured from a polystyrene and the hinge is manufactured from a polystyrene with an elastomer component added, such as ABS, and the hinge material is also photographically/chemically inert and sufficiently rigid and impact-resistant. The extruding of such a cassette housing is already known per se from the previously mentioned publication EU-B-0,016,488, but according to the invention, another material is used and the hinge is extruded at the same time in coextrusion. It will be clear that it is possible, in this manner, to manufacture a hinge of the greatest simplicity which is made of one piece with the entire housing and for which the extrusion techniques are already known and operationally reliable.

The use of the hinge makes an attractive method possible for manufacturing the housing according to the invention, which is characterized in that the housing is extruded with two V-shaped troughs situated next to each other, each V-angle of which corresponds to the optionally rounded angles of 90° each of the section of the cassette housing perpendicular with respect to the diagonal through the light lock and the hinge, and the legs of each V have a width corresponding to the walls, and

in that the hinge material is coextruded as a strip which is oppositely bent through 90° and which joins together the edges of the legs, directed towards each other, of the two V-troughs over their entire length, and in that one side of the light lock is extruded at the same time as a wall at one free long edge of the leg of one V-shaped trough and at the same time projects into the respective V-trough and the other side of the light lock is extruded at the same time as a wall at the other free long edge of the other V-shaped trough and at the same time also projects into the respective V-trough,

all this in a manner such that, after shutting the two v-shaped troughs by folding through 180° to form the housing, the two sides of the light lock are situated at a small distance from, and parallel to, each other in a manner such that they together form the side walls of the light lock.

According to the invention, the housing is extruded in a position folded open through 180°. This entails the important advantage that the extrusion mould can be much simpler than for extruding a more or less closed housing, as is the case in the known cassette. The folded-open housing may be regarded as an intermediate product and can readily be stacked for the purpose of transport and storage, which is primarily of importance if said intermediate product is not fabricated at the premises of the manufacturer of the photosensitive material.

The use of the intermediate product described above achieves a further advantage, namely that the two walls of the light lock situated in the open position, which form the light lock and the delivery slit of the closed housing, can readily be lined with the soft fibrous material. The light lock is in fact almost always of bent construction with one or more corrugations so that the contours of the walls can easily be completely followed when lining. As a result of this, the reproducibility and the quality of the lining of the light lock is much better than in the known cassettes. Preferably, a self-adhesive felt foil which costs about a quarter of the velvet generally used is used for this purpose. The following example may serve to illustrate the saving achieved herewith: for an annual fabrication of several hundred thousand cassettes, the cost price of the bare cassette with the two end covers is about one guilder. To this is added a price of 0.8 guilders for the velvet as lining material of the known cassettes against 0.2 guilders for the self-adhesive felt foil according to the invention. This signifies a saving of approximately 0.6 guilders per cassette, quite apart from the usually lower quality of the light lock in the known cassettes compared with the optimum reproducibility according to the invention.

According to a preferred embodiment, the end covers of the cassette according to the invention are characterized in that, in the centre of each cover, the part of the mandrel near the inside face of the cover which supports and guides, after filling, the roll material laterally has a circular cylindrical section, and in that the mandrel extends further out of each cover with a gently tapered section, one side of which is flattened and/or has a larger taper angle so that the mandrel terminates in a narrow edge which is situated with a certain eccentricity at a distance from the centre line, the eccentricity running in the direction of the diagonal which is perpendicular to the diagonal which, after mounting the cover on the housing, coincides with the diagonal of the housing through the light lock and the hinge, all this in a manner such that the mandrels act as a locating pin for the opening in the core of a roll to be packaged having an outside diameter which varies (within certain limits), which roll is placed in one of the V-troughs.

The properties and advantages of the end cover described above can most easily and most clearly be described in conjunction with the preferred method for using the cassette, which is characterized in that it comprises the following steps:

- the coextrusion, in an essentially flat plane, of the two V-troughs situated next to each other, each terminating in one of the interacting light-lock walls, together with the plastic hinge which joins the two V-troughs to each other,

- the bonding of the fibrous lining material to the exposed light-lock walls, the openings of the V-troughs being directed upwards,

- the cutting of the delivered standard lengths of the extruded and lined trough-material into pieces having the desired housing length,

- the placing of the V-troughs in a horizontal plane with their opening upwards,

- the placing of a roll of material wound onto a core in one of the V-troughs,

- the placing of the end flap of the material over the light-lock wall of the same V-trough,

- the folding shut of the other V-trough through 180° over the trough filled with the roll to form a housing, in which process the flap is confined to the light lock and projects through it, - the guided presentation of the end covers, with the flattened side of the point of the mandrel upwards, axially with respect to the housing filled with the roll by means of the guiding devices,
- the lifting of the core (with the roll) by the point of the mandrel as the covers are brought closer to the housing with the guiding devices,
- the closing of the cassette housing with the end covers, the core of the roll being borne and centered by the circular cylindrical part of the mandrels, the flap projecting through the closed light lock, and
- the possible securing of the end covers with respect to the housing such as with one or more wrap-rounds with a strip with which the free end of the flap is also restrained from being pulled further out or being pushed back into the cassette, for the purpose of transport and storage.

It is known per se that the roll of photosensitive material is held free of the inside wall of the cassette under all circumstances in order to avoid damage and the possible generation of static charges as far as possible. In this case, the roll is borne, via the core, by the mandrels which project inwards from the two end covers of the cassette at the centre line. Under these circumstances, the core fits with little play around the mandrels and is able to rotate with little friction around the mandrels in delivering photosensitive material through the delivery slit. According to the invention, however, a finished roll is placed in the horizontal position in one of the V-shaped troughs and, under these circumstances, temporarily rests on two adjacent side walls of the housing of the cassette. As a result of this, the centre line of the core of the roll is displaced downwards through a distance approximately equal to the play with the wall with respect to the centre line of the finally finished and filled cassette. This distance is termed the eccentricity. A certain eccentricity of the order of magnitude of a few millimetres therefore already occurs with the thickest roll which can be used during the step involving filling the cassette in which the roll is placed in the V-shaped trough. It is particularly attractive per se to handle this type of rolls in a horizontal position because the risk of telescoping is thereby avoided and the roll can easily be transported and managed with the greatest care. In addition the end flap is in the ideal position.

In practice, however, it frequently occurs that a customer orders one or more cassettes which contain a roll with a smaller outside diameter. Although, of course, one and the same core is used, this may be due to the use of thinner photosensitive material with the same length or to shorter lengths being ordered, in particular if a special quality of photosensitive material is required. If such a roll with a smaller outside diameter is placed in the manner described earlier horizontally in the V-shaped trough, the eccentricity will increase. Due to the flattening and/or the use of a larger taper angle as a locating point on the mandrel of each cover, a relatively large range of varying eccentricities can occur without any difficulty in filling the cassette. For this purpose, the end covers are always moved accurately towards the housing with the roll situated therein with the aid of guiding tools, the centre line of the mandrel coinciding with that of the finally closed cassette housing. After the roll has been placed in the V-shaped trough and the housing has been folded shut with the aid of the hinge after the flap has been pulled some distance out of the delivery slot, the end covers thus presented in a guided manner will always be accurately arranged to fit on the housing. Owing to the flattened edge of the locating point of the mandrel situated at the top, regardless of the eccentricity, the sloping flattened locating edge will sooner or later make contact with the top edge of the core and as the cover is moved further towards the housing, the roll is consequently gradually lifted up at both ends until the circular cylindrical part of the mandrel finally slips into the opening of the core. The roll is thus concentrically received and mounted in the cassette. The end covers are provided in a known manner with the necessary faces for enclosing the roll also axially in the cassette with little play in the completely assembled final state.

The end covers will have to be attached to the housing in one or the other manner such that they always remain correctly in place during storage and transport and when being used by the user. The use, for example, of an adhesive for this purpose is known, but rivets are also used as described, inter alia, in the publication EU-B-0,016,488. According to a preferred embodiment of the invention, however, grooves are provided in the outside surface of the cassette housing and, if desired, also corresponding grooves in the end covers in order to rigidly secure, and keep secured, the end covers against the housing with one or more wrap-rounds with, for example, plastic strip. Owing to this strip, yet another important advantage can be achieved, namely that said strip also restrains the free end of the flap during transport and storage against being pulled further out or pushed back into the cassette. When the filled cassette is put into use, the strip concerned can either be cut through and removed, or it is also possible to pull the flap from under the strip or to cut off the flap next to the strip.

The invention will be explained in more detail on the basis of the following description of the attached figures of a preferred embodiment of a cassette according to the invention.

Figure 1 shows a cross-section of the cassette according to the invention;

Figure 2 shows a section through the opened-up cassette housing according to the invention as extruded;

Figure 3 shows a portion of the section according to Figure 2 with the roll of photosensitive material inserted;

Figure 4 shows, in longitudinal section and in part diagrammatically, a part of the cassette housing with roll inserted according to Figure 3 shortly before an end cover is closed with the aid of a guiding device.

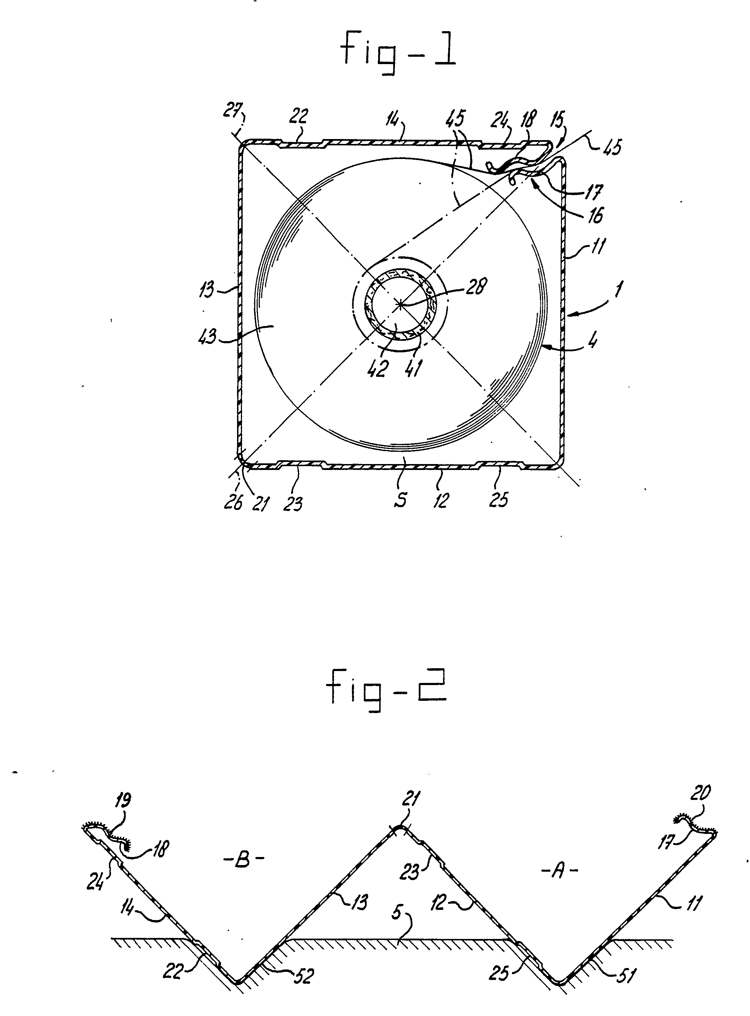

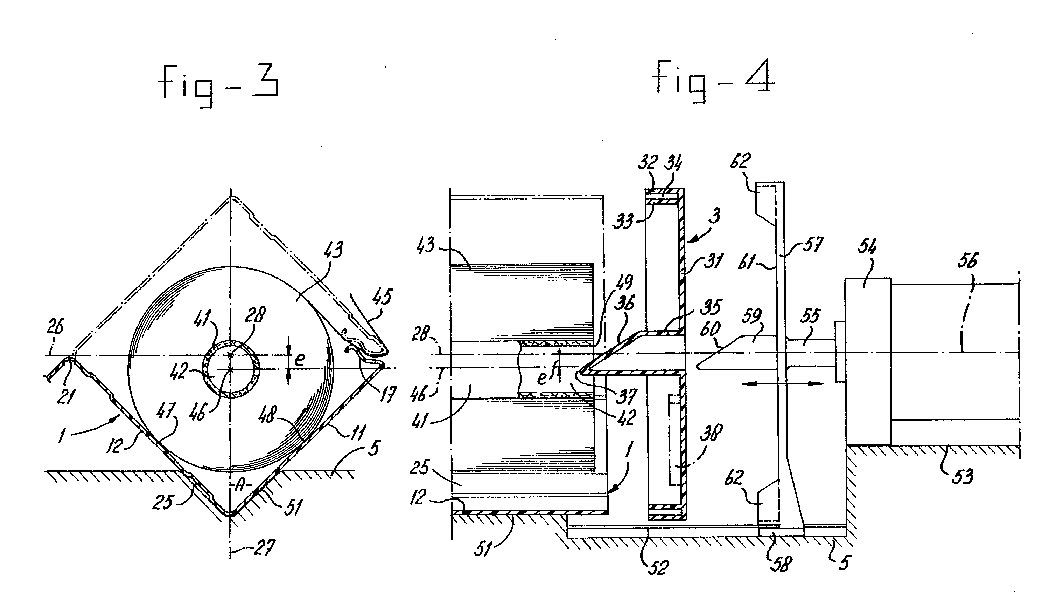

The cassette housing 1 is depicted in Figure 1 in cross-section with a roll of photosensitive material 4 placed therein in a position which occurs with the cassette completely closed by the end covers. Under these circumstances, the centre line of the roll coincides with the centre line 28 of the cassette housing 1. Depicted is the largest format of roll which can be packaged, stored and transported in the housing, a play S being present right round between the side walls 11-14 of the cassette housing and the roll 4. The photosensitive material is indicated diagrammatically by 43, while a flap 45 is inserted through the delivery slit 15 and the light lock 16. It should be emphatically pointed out that, for the purpose of simplification, the lining with fibrous material in the light lock has been omitted but that said material is diagrammatically depicted (19, 20) in Figure 2. As usual, the cassette has a housing with a square cross section so that the walls 11, 12, 13 and 14 are equally long and all are at right angles with respect to each other. Provided over the entire length in the region of one corner is the delivery slit 15 with light lock 16, while, diagonally and opposite on the same diagonal 26, a plastic hinge 21 is shown which likewise extends over the entire length of the housing. The housing is manufactured in a known manner by extrusion from an impact-resistant rigid inert plastic, such as polystyrene, while a plastic hinge material 21, for example, consisting of a polystyrene having an elastomeric component such as ABS, is also extruded with it at the same time by so-called coextrusion. Figure 1 further indicates the diagonals 26 and 27 whose intersection 28 coincides with the longitudinal centre line of the cassette. The wall 17 of the light lock is also extruded along the entire end edge of the side wall 11. In the same way, the other wall 18 of the light lock is extruded at the same time at the end edge of the side wall 14 of the housing, and in particular, in a manner such that, with the cassette housing closed and fixed by the covers, the slit in the light lock and the delivery slit have the desired width over the entire length of the housing. The side walls 17 and 18 of the light lock are multiply curved and run parallel to each other, while, at their free end which projects into the cassette housing, they are provided with radiussed inlets for the photosensitive material. Figure 1 further shows four channels 22, 23 and 24, 25 which are intended to receive wrap-round strips which are not further shown and which serve to secure the two end covers in the assembled position against coming loose from the housing. Because the strips are placed in the recesses 22-25, they cannot be involuntarily pushed off the cassette and, in addition, the cassettes remain capable of being stacked and also pushed over each other in the transverse direction. One wrap-round strip traverses the recesses 22 and 23 as an endless loop and the other traverses the recesses 24 and 25. An important advantage is achieved with the wrap-round strip near the delivery slit, namely that the filled cassette can be delivered by the manufacturer with the end of the flap 45 clamped under the strip in the recess 24. This prevents the flap being pulled too far out or being pushed back into the cassette. Before use, the flap 45 should be cut off immediately next to the wrap-round strip in the recess 24 so that it is released or the strip in the grooves 24 and 25 should be cut through and removed. The other wrap-round strip then remains intact to hold the covers in place.

Figure 2 shows the cassette housing 1 folded open through 180° as it is extruded. The plastic hinge 21 is thus folded over through 180° with respect to the working position of the cassette and the housing as shown in Figure 1. Two grooves 51 and 52 in which the two corners situated on the diagonal 27 (Figure 1) are placed are arranged at the correct distance in a fixture and auxiliary tool, which will be explained in more detail in the discussion of Figure 4, so that the folded-open housing finds a rigid support in the extruded form. In the description the space occupied by the walls 11 and 12 is termed the V-shaped trough A and in the same way, that between the walls 13 and 14 is termed the trough B. In Figure 2 the linings of the inside walls 17 and 18 of the light lock with a felt material are shown diagrammatically by 19 and 20. These can be fitted in the position shown so that there is easy access in order to fit the light-lock linings 19 and 20 correctly so that they completely follow the corrugations of the light lock. It will be clear that the extruded form of the housing depicted in Figure 2 makes possible a reasonable stacking of a large number of cassette housings within a limited volume.

Figure 3 again shows the trough A as depicted in Figure 2. A roll of photosensitive material 4 of the largest possible diameter has now been placed in said trough. Said roll lies along the contact lines 47 and 48 on the side walls 11 and 12 and is thereby situated at a distance e (in Figure 3) below the centre line 28 of the finally ready-assembled cassette. The plays S between the roll 4 and the walls 11 and 12 are in fact absent in the situation shown. If a roll having a smaller diameter were to be used, the eccentricity e would increase and the centre line 46 of the core 41 on which the photosensitive material 43 is wound would be situated lower. The flap 45 is placed on the light-lock wall 17. For the purpose of simplification, the lining of the light lock with the fibrous material 19, 20 is also not shown in Figure 3. The walls 13 and 14 which form the other V-trough are then folded shut around the hinge 21 in order to close the housing, as shown by the broken lines in Figure 3. The flap 45 is thereby enclosed between the walls 17 and 18 of the light lock. It should be pointed out that the centre lines of the roll 4 and of the housing 28 remain horizontal and that the cassette housing remains rigidly situated in the groove 51 of the tool 5. This is the ideal position for the type of rolls considered involving fragile material such as photosensitive material. Damage to the surface of the roll or to the side edges or, worse, telescoping out of the roll is thereby virtually impossible.

Figure 4 depicts a side view of the closed cassette housing according to Figure 3, and, in particular, the right-hand end thereof. It will be clear that the same tools can be situated at the left-hand end, which is not shown, as at the right-hand end and that the same operations can take place there. On the left, Figure 4 depicts the roll 4 as the latter is still situated, in accordance with Figure 3, on the contact lines 47 and 48 of the side walls 11 and 12. The centre line 46 of the roll is therefore situated at a distance e, which is equal to the eccentricity, below the centre line 28 of the cassette. In the right-hand part of Figure 4, a hydraulic jack 54 whose centre line 56 coincides with the centre line 28 of the cassette is shown on an elevation 53 of the tool 5. The rod 55, which can be pushed in and out by the jack 54 along the centre line 56 as shown by the arrows bears a positioning tool 57, 58 for the right-hand end cover 3 of the cassette. For the sake of clarity, the cover 3 is shown in Figure 4 floating in the correct position, but it will be clear that the base 31 of the cover should rest against the plate 57 for the purpose of closing the cassette and that the circumferential edge of the cover 32 is retained in a known manner by a diagrammatically shown receiving edge 62. Depending on circumstances, the holders 62 may, for example, only grip the corners of the end cover 3, as is shown diagrammatically in Figure 4. It will be clear, however, that other parts of the cover may also be gripped depending on the chosen construction of the cover.

In order to prevent rotation of the plate 57 during the assembly operation and to improve the guiding of the jack, especially in the ejected position, the bottom of the plate 57 according to Figure 4 is provided with a slide 58 which is guided in a special guide 52. The most important component of the closing tool comprises the mandrel support 59 with its face 60 flattened at the top. This fits accurately into the hollow mandrel 35, 36, 37 which is situated at the centre of the cover 3 and projects out of the base 31 of the cassette housing 1 in the assembled state. The cover is provided in a known manner with a double circumferential edge 32, 33 between which a slit 34 is situated which runs along a part of or over the entire circumference of the cover and into which the wall of the housing fits accurately in a light-proof manner. The double wall 32, 33 is interrupted locally only at the delivery slit, as far as is necessary, in a known manner not shown in order to allow the flap 45 and the photosensitive material through even in the closed state of the cassette. The outside of the mandrel is circular cylindrical at 35 in order to fit into the cavity 42 of the core 41 with little play and to mount the latter for rotation and guiding during transport, storage and use of the cassette. The mandrel continues further with a sloping face 36 which is situated at the top and which terminates in a sharp edge 37. As is evident from Figure 4, while the cover is brought closer in an accurately guided manner to the cassette housing 1 with the roll 4 situated therein, the top inside end 49 of the core 41 will come into contact with the sloping face 36 of the mandrel. This will take place sooner if the eccentricity e is large and later if the eccentricity e is small. As stated earlier, the roll 4 depicted is the largest diameter which can be stored in the cassette depicted so that the eccentricity e in the figures is minimal. Larger eccentricities e than that depicted must therefore also be possible. This is the case provided the upper inside end 49 of the core 41 is situated above the sharp leading edge 37 of the mandrel. This last is the case if the roll is about a quarter of the diameter depicted in the figures. In this connection, the same core 41 is of course always used. Because the rolls 4 with photosensitive material are relatively heavy, the projecting part of the mandrel will easily be able to sag when, as it continues to move towards the left in Figure 4, the sloping face 36 lifts up the roll via the point 49 until the eccentricity e has decreased to zero and the centre line of the roll coincides with that of the cassette housing and of the tool 56. The mandrel support 59 with the flattened side 60 therefore serve to absorb the forces acting on the mandrel during this phase of operation and to transmit them to rigid parts of the tool 51, 52, 53. As soon as the walls of the cassette housing are completely received in the groove 34, the inside of the core 41 rests on the cylindrical section 35 of the mandrel over a sufficiently long distance. At the same time, the roll 4 with the photosensitive material 43 wound onto it should be enclosed accurately with little play in the axial direction. For this purpose, elevations are provided in a known manner in the inside of the cover 3, as shown diagrammatically by 38. Said elevations 38 may have, in a known manner, various forms and also be manufactured from various materials.

It will be clear that after assembly of the end cover on the cassette housing has taken place, the tool 57-60 is again pulled back by the jack 56 to the extent that the filled and closed cassette can be removed from the tool 5. A subsequent cassette housing is then placed in the groove 51, a roll 4 is inserted, a cover 3 is placed on the tool 57/62 and the cycle of operation described above is repeated.

The wrapping-round with the abovementioned strips may, if desired, also take place on the positioning piece 5, but it may also take place after removal of the filled and closed cassette.

## Claims

1. Light-proof cassette for receiving and delivering a strip (43), such as a strip of photosensitive material which is rolled up onto a core (41) to form a roll (4), and one end (45) of which is fed out through a delivery strip (15) having a light lock (16), which cassette comprises:
an essentially square housing (1) which has optionally rounded corners approximately the length of the roll (4) to be packaged, in which the delivery slit (15) is arranged in the region of one of the corners over the entire length and which has an internal cavity such that the roll can be received and unwound without contact (S) with the walls, and two detachable end covers (3) which can be placed and mounted in a light-proof manner (32, 33, 34) on each end of the housing (1), a mandrel (35, 36, 37) projecting into the housing (1) from each cover (3) at the centre (28) of the square housing cross section, which mandrels rotatably support the ends of the core (41) of the roll (4) with little play and bear it under all conditions, the light lock (16) being lined with a soft fibrous material (19, 20) on both walls (17, 18) on either side of the delivery slit as a seal and to protect the material to be delivered, and the housing (1) and the covers (3) being manufactured from a photographically/chemically inert, rigid, impact-resistant plastic, characterized in that the corner strip (21) of the housing situated diagonally (26-26) opposite the light lock (15) is constructed as a hinge.

2. Light-proof cassette according to claim 1, characterized in that the corner strip is constructed as a plastic hinge (21) and is manufactured from an elastic material coextruded with the rest of the housing (1).

3. Cassette according to claims 1 or 2, characterized in that the housing is manufactured from a polystyrene and the hinge (21) is manufactured from a polystyrene with an elastomeric component such as ABS added and in that the hinge material is also photographically/chemically inert and sufficiently rigid and impact-resistant.

4. Method for manufacturing the housing (1) according to claims 2 or 3, characterized in that the housing is extruded with two V-shaped troughs (A, B) situated next to each other, each V-angle of which corresponds to the optionally rounded angles of $90°$ each of the section (27-27) of the cassette housing perpendicular with respect to the diagonal (26-26) through the cassette lock (15) and the hinge (21), and the legs of each V have a width corresponding to the walls (11-14), and in that the hinge material is coextruded as a strip which is oppositely bent through $90°$ and which joins together the edges of the legs (12, 13), directed towards each other, of the two V-troughs over their entire length, and in that one side of the light lock is extruded at the same time as a wall (17) at one free long edge of the leg (11) of one V-shaped trough (A) and at the same time projects into the respective V-trough and the other side of the light lock is extruded at the same time as a wall (18) at the other free long edge of the other V-shaped trough (B) and at the same time also projects into the respective V-trough,
all this in a manner such that, after shutting the two V-shaped troughs by folding through $180°$ to form the housing, the two sides of the light lock (17, 18) are situated at a small distance from, and parallel to, each other in a manner such that they together form the side walls of the light lock (16).

5. Method according to claim 4, characterized in that the two sides of the walls (17, 18) of the light lock facing away from the base of each trough are each lined with a soft fibrous material, such as a self-adhesive felt foil (19, 20) in the still folded-open form of the housing as extruded, the contours of the walls being completely followed.

6. Cassette according to one or more of the preceding claims, characterized in that in the centre (28) of each cover (3), the part of the mandrel near the inside face (31) of the cover which supports and guides (38), after filling, the roll material laterally, has a circular cylindrical section (35), and in that the mandrel extends further out of each cover with a gently tapered section, one side (36) of which is flattened and/or has a larger taper angle so that the mandrel terminates in a narrow edge (37) which is situated with a certain eccentricity (e) at a distance from the centre line (28), the eccentricity (e) running in the direction of the diagonal (27-27) which is perpendicular to the diagonal (26-26) which, after mounting the cover on the housing, coincides with the diagonal (26-26) of the housing through the light lock (15) and the hinge (21) all this in a manner such that the mandrels act as a locating pin for the opening (42) in the core (41) of a roll (4) to be packaged having an outside diameter which varies (within certain limits), which roll is placed in one of the V-troughs (A).

7. Method for using the cassette according to one or more of the preceding claims, characterized in that it comprises the following steps:
- the coextrusion, in an essentially flat plane, of the two V-troughs (A, B) situated next to each other, each terminating in one of the interacting light-lock walls (17, 18), together with the plastic hinge (21) which joins the two V-troughs (A, B) to each other,
- the secure bonding of the fibrous lining material (19, 20) to the exposed light-lock walls (17, 18), the openings of the V-troughs (A, B) being directed upwards,
- the cutting of the delivered standard lengths of the extruded and lined trough-material into pieces having the desired housing length,
- the placing of the V-troughs in a horizontal plane (5, 51) with their openings upwards,
- the placing of a roll (4) of material wound onto a core (41) in one of the V-troughs (A),
- the placing of the end flap (45) of the material over the light lock wall (17) of the same V-trough (A),
- the folding shut of the other V-trough (B) through 180° over the trough (A) filled with the roll (4) to form a housing (1), in which process the flap (45) is confined in the light lock (15) and projects through it,
- the guided presentation of the end covers (3), with the flattened side (36) of the point of the mandrel upwards, axially with respect to the housing (1) filled with the roll (4) by means of the guiding devices (52, 58; 55),
- the lifting of the core (41) (with the roll) by the point of the mandrel (36) as the covers are brought closer to the housing with the guiding devices,
- the closing of the cassette housing with the end covers (3), the core (41) of the roll being borne and centred by the circular cylindrical parts (35) of the mandrels, the flap (45) projecting through the closed light lock (15), and
- the possible securing of the end covers (3) with respect to the housing (1) such as with one or more wrap-rounds (22-25) with a strip with which the free end of the flap (45) is also restrained from being pulled further out or being pushed back into the cassette, for the purpose of transport and storage.

# fig-1

# fig-2

Fig-4

Fig-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | FR-A-2 309 898 (AGFA-GEVAERT N.V.) <br> * Pages 3-9; figures 1-10 * | 1,3,6 | G 03 B 27/58 |
| Y | DE-U-8 710 228 (REHAU AG & CO.) <br> * Page 9, lines 8-17; figure 1 * | 1,2 | |
| Y | US-A-4 431 139 (C.D. BARMSBEE) <br> * Column 2, lines 55-68; column 3, lines 1-5,55-59 * | 1,2,3,6 | |

TECHNICAL FIELDS
SEARCHED (Int. Cl.4)

G 03 B 27/58
G 03 C 3/00

The present search report has been drawn up for all claims

| Place of search | Date of completion of the search | Examiner |
|---|---|---|
| THE HAGUE | 17-04-1989 | BOEYKENS J.W. |